# EUROPEAN PATENT SPECIFICATION

(11) **EP 2 889 338 B1**
(45) Date of publication and mention of the grant of the patent: **18.10.2017**
(21) Application number: 13832372.0
(22) Date of filing: 07.08.2013
(51) Int. Cl.: C09D 1/00, C09D 7/12, C23C 26/00, F01N 13/14

(54) **PAINT FOR EXHAUST SYSTEM COMPONENT AND EXHAUST SYSTEM COMPONENT**
LACK FÜR ABGASSYSTEMKOMPONENTE UND ABGASSYSTEMKOMPONENTE
PEINTURE POUR COMPOSANT DE SYSTÈME D'ÉCHAPPEMENT ET COMPOSANT DE SYSTÈME D'ÉCHAPPEMENT

(30) Priority: 27.08.2012 JP 2012187063
(43) Date of publication of application: 01.07.2015
(73) Proprietor: Ibiden Co., Ltd., Ogaki-shi, Gifu 503-8604 (JP)
(72) Inventor: MUTSUDA Fumiyuki, Ibi-gun Gifu 501-0695 (JP); FUJITA Yoshitaka, Ibi-gun Gifu 501-0695 (JP)
(74) Representative: Hoffmann Eitle
(86) International application number: PCT/JP2013/071360
(87) International publication number: WO 2014/034395

(56) References cited:
- EP-A2- 1 132 448
- WO-A1-2010/053729
- WO-A1-2011/025569
- WO-A1-2012/093697
- WO-A2-2010/074711
- WO-A2-2010/088643
- GB-A- 2 319 248
- JP-A- S61 244 819
- JP-A- 2003 253 475
- JP-A- 2010 168 998
- US-A1- 2010 304 120
- US-A1- 2012 024 312

## Description

### TECHNICAL FIELD

The present invention relates to an exhaust system component.

### BACKGROUND ART

A catalytic converter is provided in the path of an exhaust pipe to treat toxic substances in exhaust gas discharged from an engine.

In order to improve the efficiency of converting toxic substances by a catalytic converter, the temperatures of exhaust gas and such a component as an exhaust pipe through which the exhaust gas passes need to be maintained at a temperature suitable for catalytic activation (hereinafter, also referred to as a catalyst activation temperature).

In traditional exhaust gas purifying systems, the temperature of the catalytic converter at the start of the engine is lower than the catalyst activation temperature. Thus, the catalyst fails to provide its functions and has difficulty in completely preventing the discharge of toxic substances at the start of the engine.

For this reason, an exhaust pipe connected to the engine needs to be heated up to the catalyst activation temperature in a short time after the start of the engine.

Patent Literature documents 1 to 3 each deal with the above problem by providing a structure that includes a base made of metal and an inorganic material surface layer made of crystalline and amorphous inorganic materials. The inorganic material surface layer has lower heat conductivity than the base, but has a higher infrared emissivity than the base.

Specifically, for example, manganese dioxide or copper oxide is used as a crystalline inorganic material and barium-silica glass is used as an amorphous inorganic material.

### CITATION LIST

### - Patent Literature

Patent Literature 1: JP 2008-69383 A
Patent Literature 2: JP 2009-133213 A
Patent Literature 3: JP 2009-133214 A

WO 2011/025569 A1 discloses coating compositions for thermal protection of substrates. The coating is designed to reduce/minimize the thermal diffusivity of the composite and uses constituent materials selected from groups of inorganic fibers, hollow microspheres, aerogels, and inorganic binders. Thermal diffusivity can be reduced/minimized by controlling the relative concentrations of the coating components.

US 2012/024312 A1 discloses compositions for coatings that repel dust. The compositions comprise colloidal silica suspended in a low molecular weight alcohol, hard nanoparticles; a fluoride source; and combustible organic compounds.

EP 1 132 448 A2 discloses an antifogging article including a substrate and an antifogging film covering the substrate. The antifogging film contains a metal oxide constituting a matrix phase of the antifogging film and ultrafine oxide particles constituting a dispersed phase of the antifogging film. The antifogging article is superior in hydrophilicity and antifogging property.

GB 2 319 248 A discloses zirconia-containing coating compositions and their application to metal substrates. The composition comprises spheres of zirconia, at least some of which are hollow, contained within a porous oxide matrix, such as aluminosilicate.

US 2010/304120 A1 discloses a self-cleaning member comprising a member having a porous surface.

WO 2010/088643 A2 discloses a composition comprising: an aqueous dispersion of fluoroalkylsilyl surface modified nanoparticles, wherein the nanoparticles may comprise silica and/or zirconia.

WO 2010/074711 A2 discloses a porous ceramic structure skin coating which provides a hardshell, strong, acid- and alkali-resistant, chip-resistant ceramic honeycomb structure coating which resists pollution control catalyst from being absorbed into the skin coating.

WO 2010/053729 A1 discloses a coated abrasive article for polishing or lapping applications. The coated abrasive article is formed by coating an abrasive slurry onto the surface of the backing, and then removing an continuous phase included in the abrasive slurry.

### SUMMARY OF INVENTION

### - Technical Problem

The surface layers proposed in Patent Literature documents 1 to 3 contain a low thermal conductive oxide, such as barium-silica glass, on the base surface, so that they have certain heat insulating ability. Nevertheless, this heat insulating ability is still insufficient for heating the catalytic converter to the catalyst activation temperature in a short time from the start of the engine.

In order to improve the heat insulating ability of a surface coat layer, the present inventors have attempted to introduce pores into the surface coat layer. This attempt resulted in further improvement in heat insulating ability. When, however, pores are merely introduced into the surface coat layer and the base is heated to high temperature, the viscosity of the surface coat layer formed from an amorphous inorganic material decreases, so that the pores unite with each other to form larger pores. As a progress of formation of large pores from the pores, the strength of the surface coat layer decreases, resulting in problems such as easy destruction due to thermal stress when the temperature of the base rapidly increases, for example. This also results in a problem of an increase in thermal conductivity and deterioration in heat insulating ability because of increases in convection heat transfer and radiant heat transfer caused by the pores.

The present invention has been devised so as to solve the above problems. It aims to provide an exhaust system component in which pores dispersed in a surface coat layer are less likely to unite with each other even at high temperature so that the resulting surface coat layer disposed on a base surface of the component can have sufficient heat insulating ability for a long period of time and have excellent heat retention at low temperature.

### - Solution to Problems

According to the present invention, an exhaust system component is provided by applying a paint for an exhaust system component to a base made of metal, the paint comprising an amorphous inorganic material containing silica, crystalline inorganic material particles containing zirconia, and pore-forming material particles; the crystalline inorganic material particles having an average particle size of 0.1 to 150 µm; the weight of the crystalline inorganic material particles for 100 parts by weight of the amorphous inorganic material being 30 to 180 parts by weight; the pore-forming material particles having an average particle size of 0.1 to 25 µm; and the weight of the pore-forming material particles for 100 parts by weight of the amorphous inorganic material being 0.001 to 1 parts by weight.

As the paint having the above composition is applied to a base made of metal and then fired, a surface coat layer is formed on the base surface. This surface coat layer comprises an amorphous inorganic material layer in which crystalline inorganic material particles having an average particle size of 0.1 to 150 µm and pores having a predetermined pore size attributed to a pore-forming material are dispersed therein. The pores dispersed in the surface coat layer inhibit heat conduction inside the solid, resulting in excellent heat insulating ability.

The pores formed inside the surface coat layer are smaller than the thickness of the surface coat layer and remain in the surface coat layer. Thus, the thickness of the surface coat layer can be adjusted within a range appropriate to maintain the heat insulating ability.

The formed surface coat layer also comprises the crystalline inorganic material particles dispersed therein. Thus, even when the surface coat layer is heated up to high temperature, the crystalline inorganic material particles serve as obstructions to the movement of the pores, preventing the pores from moving. This prevents the deterioration in heat insulating ability due to the union of pores.

Since the crystalline inorganic material contains zirconia and the amorphous inorganic material contains silica, the reaction between the amorphous inorganic material and the crystalline inorganic material can generate crystals of reaction-derived particles (e.g., Ba_{α}Zr_{β}Si_{γ}O_{σ} (BaZrSi₃O₉, Ba₂Zr₂Si₃O₂), zircon (ZrSiO₄)) from the crystalline inorganic material particles. These crystals of the reaction-derived particles grow to inhibit the movement of the pores, making it possible to maintain high heat insulating ability.

The crystalline inorganic material particles are also excellent in heat resistance and play a role of reinforcing the mechanical properties of the surface coat layer. Thus, the particles can prevent the generation of defects such as cracks due to the deterioration in mechanical strength of the surface coat layer. Further, the reaction-derived particles complexly bite into the amorphous inorganic material, showing the spike effect of firmly fixing the crystalline inorganic material inside the surface coat layer. This further improves the mechanical strength of the surface coat layer.

In the paint for an exhaust system component of the present invention, the pore-forming material preferably comprises carbon, a carbonate, or a foaming agent.

With the above pore-forming material, this pore-forming material is decomposed into gas or generates bubbles during the formation of a surface coat layer, thereby forming pores inside the surface coat layer. This allows the surface coat layer to exert heat insulating ability. [Go to page 8] inside the surface coat layer.

The surface coat layer can be formed by a method in which the paint for an exhaust system component is applied to a base and the workpiece is fired at high temperature in a furnace such as an oven.

If necessary, the paint for an exhaust system component may be dried at low temperature after applied to the base. Such low temperature drying does not form a surface coat layer. If the paint for an exhaust system component is applied to an exhaust pipe as a base and dried, and then this coated exhaust pipe is mounted on a vehicle, for example, the paint for an exhaust system component is fired by the high-temperature exhaust gas passing through the exhaust pipe, thereby forming a surface coat layer. This means that the firing step can be substituted by heating and firing owing to exhaust gas so as to simplify the production process.

If the pore-forming material gasifies at lower than 600°C, it starts to, for example, decompose before the amorphous inorganic material melts to form a film, failing to form pores well. If the pore-forming material does not gasify even at 1000°C, the amorphous inorganic material needs to be heated up to high temperature so that the viscosity of the molten amorphous inorganic material decreases. Thus, an amorphous inorganic material layer is difficult to form.

In the paint for an exhaust system component of the present invention, the crystalline inorganic material particles preferably contain 20% by weight or more of zirconia.

The crystalline inorganic material particles containing 20% by weight or more of zirconia allow the paint to contain inorganic particles excellent in mechanical properties such as strength, as well as excellent in heat resistance. Thus, the resulting surface coat layer is excellent in mechanical properties and heat resistance.

Further, zirconia is a crystalline inorganic material excellent in corrosion resistance. Thus, even when the surface coat layer of an exhaust system component is directly exposed to high-temperature exhaust gas, zirconia prevents corrosion of the surface coat layer of the exhaust system component caused by nitrogen oxide (NOx) and/or sulfur oxide (SOx) contained in the exhaust gas.

If the crystalline inorganic material particles contain less than 20% by weight of zirconia, a small number of reaction-derived particles are generated or no reaction-derived particles are generated.

In the paint for an exhaust system component of the present invention, the amorphous inorganic material preferably contains 20% by weight or more of silica.

With the amorphous inorganic material containing 20% by weight or more of silica, the reaction between the crystalline inorganic material and the amorphous inorganic material more easily proceeds so that reaction-derived particles easily precipitate. The reaction-derived particles precipitating from the surface of the crystalline inorganic material more effectively inhibit the movement of the pores. Further, the reaction-derived particles growing from the crystalline inorganic material show the spike effect of firmly fixing the crystalline inorganic material inside the surface coat layer. Thus, the crystalline inorganic material particles are firmly fixed inside the amorphous inorganic material layer, further improving the mechanical properties of the surface coat layer.

If the amorphous inorganic material contains less than 20% by weight of silica, the reaction is less likely

The exhaust system component of the present invention comprises a base made of metal, and one surface coat layer disposed on the surface of the base; the surface coat layer comprising an amorphous inorganic material layer containing silica, and crystalline inorganic material particles containing zirconia, reaction-derived particles generated by a reaction between the crystalline inorganic material particles and the amorphous inorganic material layer, and pores, each dispersed inside the amorphous inorganic material layer; the reaction-derived particles comprising crushed or needle-shaped particles; the ratio between the average pore size of the pores and the average particle size of the crystalline inorganic material particles represented by (the average particle size of the crystalline inorganic material particles)/(the average pore size of the pores) being 0.1 to 10; and the surface coat layer being formed by applying, to a base, the above-described paint, and heating the paint applied.

In the exhaust system component of the present invention, the surface coat layer comprises an amorphous inorganic material layer containing silica, and crystalline inorganic material particles containing zirconia, reaction-derived particles generated by the reaction between the crystalline inorganic material particles and the amorphous inorganic material layer, and pores, each dispersed inside the amorphous inorganic material layer. The pores existing in the surface coat layer inhibit heat conduction inside the solid, resulting in excellent heat insulating ability.

The crystalline inorganic material particles are dispersed in the surface coat layer and the ratio between the average pore size of the pores and the average particle size of the crystalline inorganic material particles ((average particle size of crystalline inorganic material particles)/(average pore size of pores)) is 0.1 to 10. Thus, even when the surface coat layer is heated up to high temperature, the crystalline inorganic material particles serve as obstructions to the movement of the pores, preventing the pores from moving. This prevents the deterioration in heat insulating ability due to the union of pores.

If the ratio between the average pore size of the pores and the average particle size of the crystalline inorganic material particles ((average particle size of crystalline inorganic material particles)/(average pore size of pores)) is lower than 0.1, the crystalline inorganic material fails to serve as an obstruction to the pores. Thus, the pores move and unite with each other, causing the deterioration in heat insulating ability.

If the ratio between the average pore size of the pores and the average particle size of the crystalline inorganic material particles ((average particle size of crystalline inorganic material particles)/(average pore size of pores)) is higher than 10, the crystalline inorganic material is likely to push and destroy the pores, easily deteriorating the mechanical strength and heat insulating ability of the surface coat layer.

As mentioned above, the crystalline inorganic material having too small or too large a particle size with respect to the pore size shows a small effect of physically inhibiting the movement of the pores. Thus, the ratio between the average pore size of the pores and the average particle size of the crystalline inorganic material particles ((average particle size of crystalline inorganic material particles)/(average pore size of pores)) is preferably within the range of 0.1 to 10, and more preferably 0.5 to 5. There is basically a trade-off between the heat insulating ability and the mechanical strength of the surface coat layer. A ratio within the range of 0.5 to 5 provides the best balance between heat insulating ability and strength when the exhaust system component is used as an automobile component.

The phrase "the surface coat layer is heated up to high temperature" herein means that the temperature of the surface coat layer is 750°C or higher.

The crystalline inorganic material particles also play a role of reinforcing the mechanical properties of the surface coat layer and are excellent in heat resistance. Thus, they allow the surface coat layer to have excellent heat resistance and prevent occurrence of defects such as cracks due to the deterioration in mechanical strength.

The surface coat layer further contains crushed or needle-like reaction-derived particles generated by the reaction between the crystalline inorganic material particles and the amorphous inorganic material layer. The reaction-derived particles inhibit the movement of the pores, so that the surface coat layer can maintain high heat insulating ability. The word "crushed" herein means the shape of an aggregate of multiple needle-like crystals that result from the growing and branching of the needle-like particles.

In the exhaust system component of the present invention, 5 to 50% by weight of the crystalline inorganic material particles are preferably in contact with the pores having a pore size of 0.1 to 50 µm.

If the pores are in contact with or attach to the crystalline inorganic material particles, they are less likely to move away from the crystalline inorganic material particles even at high temperature. Thus, the surface coat layer can maintain high heat insulating ability.

Whether or not the crystalline inorganic material particles are in contact with the pores can be determined by cutting the surface coat layer and then observing the cut surface using a scanning electron microscope (SEM).

If less than 5% by weight of the crystalline inorganic material particles are in contact with the pores, the crystalline inorganic material fails to contribute to inhibition of the movement of the pores. Thus, the pores unite with each other, deteriorating the heat insulating ability. If more than 50% by weight of the crystalline inorganic material particles are in contact with the pores, the surface coat layer contains too many crystalline particles, deteriorating the mechanical strength or heat insulating ability of the surface coat layer.

Assuming that the pores having an average pore size of smaller than 0.1 µm are in contact with the crystalline inorganic material particles, pores with such a size are technically difficult to form. Formation of such pores requires use of special material such as very small pore-forming material, unfavorably causing a significant increase in material cost.

If the pores having a pore size of larger than 50 µm are in contact with the crystalline inorganic material particles, such large pores are united pores after the movement in many cases. As mentioned here, the surface coat layer having pores with a large pore size formed therein contains less solid, so that the surface coat layer has deteriorated mechanical properties. Further, such large pores promote a heat release effect in the pores due to convection heat transfer and radiant heat transfer, deteriorating the heat insulating ability.

In the exhaust system component of the present invention, the crystalline inorganic material particles preferably contain 20% by weight or more of zirconia.

Zirconia is a crystalline inorganic material excellent in heat resistance. Even when the surface coat layer of the exhaust system component is exposed to high temperature, the zirconia existing in the surface coat layer of the exhaust system component is less likely to soften, preventing the surface coat layer from peeling off a base made of metal.

Further, zirconia is a crystalline inorganic material excellent in corrosion resistance. Even when the surface coat layer of the exhaust system component is directly exposed to high-temperature exhaust gas, zirconia prevents corrosion of the surface coat layer of the exhaust system component caused by nitrogen oxide (NOx) and/or sulfur oxide (SOx) contained in the exhaust gas.

If the crystalline inorganic material particles contain less than 20% by weight of zirconia, the particles derived from the reaction with amorphous inorganic material insufficiently grow. Thus, the crystalline inorganic material particles including the reaction-derived particles have a deteriorated effect of inhibiting the movement of the pores, and the resulting surface coat layer has deteriorated mechanical strength.

In the exhaust system component of the present invention, the surface coat material layer preferably has a porosity of 30 to 80%.

The surface coat material layer having a porosity of 30 to 80% has a sufficient number of pores contributing to the heat insulating ability, so that the surface coat material layer can maintain good heat insulating ability.

The surface coat material layer having a porosity of lower than 30% has insufficient heat insulating ability that is attributed to the existence of the pores. The surface coat material layer having a porosity of higher than 80% contains less solid, so that it has weakened mechanical strength.

In the exhaust system component of the present invention, the pores preferably have an average pore size of 0.1 to 50 µm.

The pores having an average pore size of 0.1 to 50 µm easily disperse in the surface coat layer, so that the surface coat layer can maintain high heat insulating ability.

Pores having an average pore size of smaller than 0.1 µm are technically difficult to form. Formation of such pores requires use of special material such as very small pore-forming material. This unfavorably causes a significant increase in material cost.

The pores having an average pore size of larger than 50 µm are united pores after the movement in many cases. The surface coat layer having pores with a large pore size formed therein contains less solid, so that the surface coat layer has deteriorated mechanical properties. Further, such large pores promote a heat release effect in the pores due to convection heat transfer and radiant heat transfer, deteriorating the heat insulating ability.

In the exhaust system component of the present invention, the crystalline inorganic material particles preferably have an average particle size of 0.1 to 150 µm.

The crystalline inorganic material particles having an average particle size of 0.1 to 150 µm are larger than the pores. Thus, the crystalline inorganic material particles inhibit the movement of the pores even when the surface coat layer is heated up to high temperature, making it possible to maintain high heat insulating ability.

The crystalline inorganic material particles having an average particle size of smaller than 0.1 µm have difficulty in inhibiting the movement of the pores and contain less zirconia, making it difficult to maintain high heat resistance after drying. If the crystalline inorganic material particles have an average particle size of larger than 150 µm, the surface of the surface coat layer and the crystalline inorganic material particles are close to each other at many sites. Thus, cracks easily occur on the surface due to even a small stress such as bending.

In the exhaust system component of the present invention, the reaction-derived particles preferably have an average particle size of 0.01 to 25 µm.

Crystals of the reaction-derived particles, which are generated by the reaction between the crystalline inorganic material and the amorphous inorganic material, extend from the surface of the crystalline inorganic material. Thus, the reaction-derived particles having an average particle size of 0.01 to 25 µm lead to the same effect as the extension of the crystalline inorganic material particles, so that they have a large effect of inhibiting the movement of the pores.

The reaction-derived particles having an average particle size of smaller than 0.01 µm have a small effect of inhibiting the movement of the pores. The reaction-derived particles having an average particle size of larger than 25 µm are too large in the surface coat layer. Thus, the surface coat layer needs to excessively be thick, so that the surface coat layer has an increased bending stress and cracks easily occur.

In the exhaust system component of the present invention, the surface coat layer preferably has a thickness of 50 to 2000 µm.

The surface coat layer having a thickness within the above range provides a ratio of the size of pores and a ratio of the size of crystalline inorganic material particles each to the thickness of the surface coat layer within a suitable range, more favorably maintaining the heat insulating ability and the mechanical properties.

The surface coat layer having a thickness of smaller than 50 µm is so thin that, when the exhaust system component is put to use, the surface coat layer exerts insufficient heat insulating ability. The surface coat layer having a thickness of larger than 2000 µm is so thick that, when the component receives thermal shock, the difference is likely to be large between the temperature of the interface between the surface coat layer and the base and the temperature of the surface exposed to the atmosphere. This easily results in breakage of the surface coat layer.

In the exhaust system component of the present invention, the surface coat layer preferably has a thermal conductivity at room temperature of 0.05 to 2 W/mK.

The surface coat layer having a thermal conductivity at room temperature of 0.05 to 2 W/mK in the exhaust system component of the present invention is excellent in heat insulating ability, and the thermal conductivity thereof is less likely to increase even at high temperature, preventing a decrease in temperature of exhaust gas, for example.

In consideration of the balance between the technical viewpoint and the economical viewpoint, it is not easy to achieve the surface coat layer having a thermal conductivity at room temperature of lower than 0.05 W/mK. If the thermal conductivity of the surface coat layer at room temperature is higher than 2 W/mK, the exhaust pipe has insufficient heat retention within a low temperature region. When the surface coat layer is used for an exhaust pipe, for example, it takes long time to increase the temperature of a catalytic converter to the catalyst activation temperature.

In the exhaust system component of the present invention, the crystalline inorganic material particles are preferably particles comprising zirconia, or a composite oxide of zirconia and at least one selected of yttria, calcia, magnesia, ceria, alumina, and hafnia.

The oxide comprising the above material used in the exhaust system component of the present invention has low thermal conductivity. Thus, use of an oxide comprising the above material as the crystalline inorganic material particles can further improve the heat insulating ability of the surface coat layer.

In the exhaust system component of the present invention, the amorphous inorganic material preferably contains low-melting glass having a softening point of 300°C to 1000°C.

With the amorphous inorganic material comprising low-melting glass having a softening point of 300°C to 1000°C in the exhaust system component of the present invention, the surface coat layer can relatively easily be formed by, for example, applying a material composition for forming a surface coat layer to the surface of a base to form a layer of the material composition and then heating the layer of the composition.

If the softening point of the low-melting glass is lower than 300°C, which is excessively low as a softening point, the layer to be a surface coat layer is easily molten, for example, to flow during heating. This makes it difficult to form a layer with a uniform thickness. If the softening point of the low-melting glass is higher than 1000°C, the heating temperature needs to be significantly high. Such heating may deteriorate the mechanical properties of the base. In this case, the surface coat layer containing the amorphous inorganic material may fail to follow the temperature-dependent thermal expansion of the base. Thus, cracks may easily occur on the surface coat layer, resulting in peeling off of the surface coat layer.

In the exhaust system component of the present invention, the low-melting glass preferably contains at least one of barium glass, boron glass, strontium glass, alumina-silica glass, soda zinc glass, and soda barium glass.

Use of low-melting glass comprising any of the above materials in the exhaust system component enables formation, on the surface of the base, of a surface coat layer having low heat conductivity, as well as having heat resistance and durability.

In the exhaust system component of the present invention, preferably, the base is an exhaust pipe, and the exhaust pipe has a surface coat material layer disposed on an inner side thereof.

The exhaust pipe having the surface coat layer of the present invention disposed thereinside in the exhaust system component is excellent in heat insulating ability. Thus, use of this exhaust pipe enables an increase in temperature up to the catalyst activation temperature in a short time from the start of the engine, so that the catalytic converter can sufficiently exert its performance from the start of the engine.

### BRIEF DESCRIPTION OF DRAWINGS

Fig. 1 is a cross-sectional view schematically illustrating the exhaust system component of the present invention.
Fig. 2 is a scanning electron microscopic (SEM) image showing a longitudinal section of the surface coat layer constituting the exhaust system component of the present invention.
Fig. 3(a) and Fig. 3(b) are cross-sectional views schematically illustrating different examples of the exhaust system component of the present invention.
Fig. 4 is an exploded perspective view schematically illustrating a vehicle engine and an exhaust manifold connected to the vehicle engine, each of which relate to the exhaust system component of the present invention.
Fig. 5(a) is an A-A line cross-sectional view of the vehicle engine and the exhaust manifold illustrated in Fig. 4; and Fig. 5(b) is a B-B line cross-sectional view of the exhaust manifold illustrated in Fig. 5(a).

### DESCRIPTION OF EMBODIMENTS

The present invention will be described in detail below. The present invention, however, is not limited by the following description, and appropriate variations and modifications may be made within the scope of the present invention.

The following will describe the exhaust system component of the present invention and the paint for an exhaust system component of the present invention to be used in production of the exhaust system component.

First described is the exhaust system component of the present invention.

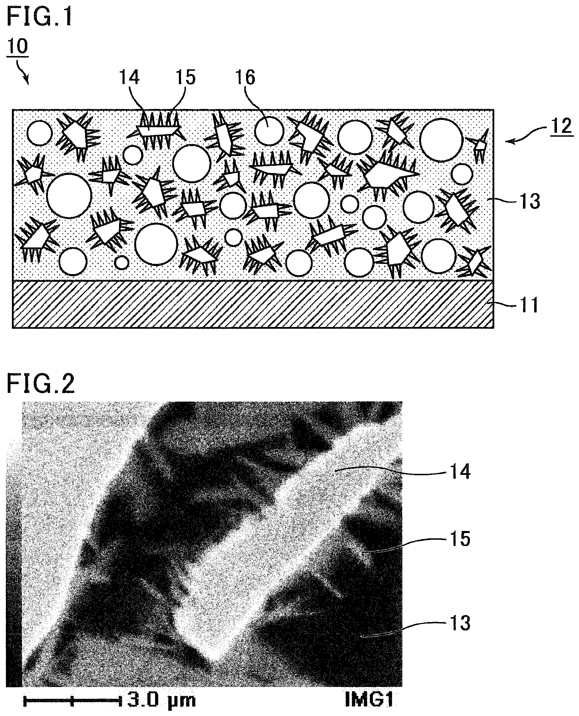

Fig. 1 is a cross-sectional view schematically illustrating the exhaust system component of the present invention.

An exhaust system component 10 illustrated in Fig. 1 comprises a base 11 made of metal and one surface coat layer 12 disposed on the surface of the base 11.

In the exhaust system component 10 illustrated in Fig. 1, the surface coat layer 12 disposed on the surface of the base 11 comprises an amorphous inorganic material layer 13 containing silica, and particles 14 of crystalline inorganic material containing zirconia, reaction-derived particles 15 generated by the reaction between the crystalline inorganic material particles 14 and the amorphous inorganic material layer 13, and pores 16, each dispersed inside the amorphous inorganic material layer 13.

As illustrated in Fig. 1, the reaction-derived particles and the pores with multiple sizes are dispersed in the surface coat layer. The reaction-derived particles also exist in the surface coat layer with various sizes and shapes. The reaction-derived particles having similar shapes are oriented not in the single direction but in multiple random directions.

The material of the base 11 constituting the exhaust system component 10 is, for example, a metal such as stainless steel, steel, iron, or copper, or an alloy such as nickel alloy (e.g. Inconel, Hastelloy, Invar). As described later, the adhesion between the surface coat layer 12 and the base 11 made of metal can be improved by bringing the coefficient of thermal expansion of the base close to that of the amorphous inorganic material layer 13.

For good adhesion with the surface coat layer, the base surface may be subjected to roughening treatment such as sandblast treatment and chemical treatment.

The surface of the base after the roughening treatment preferably has a surface roughness Rz_{JIS} of 1.5 to 20 µm. The surface roughness Rz_{JIS} of the above roughened surface is a ten point height of roughness profile defined in JIS B0601 (2001).

If the surface roughness Rz_{JIS} of the roughened surface of the base of the exhaust system component is lower than 1.5 µm, the surface area of the base is so small that the adhesion between the base and the surface coat layer is less likely to sufficiently be achieved. If the surface roughness Rz_{JIS} of the roughened surface of the base of the exhaust system component is higher than 20 µm, a surface coat layer is less likely to be formed on the surface of the base. This is probably because as follows. Specifically, if the surface roughness Rz_{JIS} of the roughened surface of the base of the exhaust system component is excessively high, the slurry (a raw material for a surface coat layer) fails to enter the recessed portions of the irregularities formed on the surface of the base, resulting in the formation of gaps in these recessed portions.

The surface roughness Rz_{JIS} of the roughened surface of the base of the exhaust system component can be measured with HANDYSURF E-35B (TOKYO SEIMITSU CO., LTD.) in accordance with JIS B 0601 (2001).

The base 11 may have a plate shape, a semi-cylindrical shape, a cylindrical shape, or any other shape, and the cross section thereof may have any peripheral shape such as an oval shape or a polygonal shape.

If the base of the exhaust system component is a tubiform base, the diameter of the base may not be constant in the longitudinal direction, and the cross-sectional shape of the base perpendicular to the longitudinal direction may not be constant in the longitudinal direction.

In the exhaust system component of the present invention, the lower limit of the thickness of the base is preferably 0.2 mm, and more preferably 0.4 mm, while the upper limit is preferably 10 mm, and more preferably 4 mm.

The base having a thickness of smaller than 0.2 mm causes the exhaust system component to have insufficient strength. The base having a thickness of greater than 10 mm causes the exhaust system component to have a large weight. Such a component is difficult to mount on a vehicle such as a passenger car, being unsuitable for practical use.

The amorphous inorganic material constituting the surface coat layer 12 of the exhaust system component preferably contains silica, and preferably contains 20% by weight or more of silica.

Since the amorphous inorganic material contains silica, it easily reacts with the crystalline inorganic material particles 14 containing zirconia dispersed inside the amorphous inorganic material layer 13 to generate zircon containing silica. In particular, the amorphous inorganic component containing 30% by weight or more of silica makes it easier to generate zircon.

The amorphous inorganic material preferably contains low-melting glass having a softening point of 300°C to 1000°C.

The low-melting glass may be of any type, and examples thereof include soda-lime glass, non-alkali glass, borosilicate glass, potash glass, lead glass, lead-free titanium glass, barium glass, boron glass, strontium glass, alumina-silica glass, soda zinc glass, and soda barium glass.

These low-melting glasses may be used alone or in admixture of two or more.

The low-melting glass having a softening point within the range of 300°C to 1000°C enables easy formation of the surface coat layer 12 on the base made of metal with excellent adhesion with the base by applying the molten low-melting glass to the surface of the base (metal material) (i.e., coating the base surface with the molten glass), and then heating and firing the molten glass.

If the softening point of the low-melting glass is lower than 300°C, which is excessively low as a softening point, the layer to be a surface coat layer easily melts, for example, to flow during heating. This makes it difficult to form a layer with a uniform thickness. If the softening point of the low-melting glass is higher than 1000°C, the heating temperature needs to significantly be high. Such heating may deteriorate the mechanical properties of the base.

The softening point can be determined by the method in accordance with JIS R3103-1:2001 using, for example, an automatic measuring apparatus of glass softening and strain points (SSPM-31, OPT Corp.).

The borosilicate glass may be of any type, and examples thereof include SiO₂-B₂O₃-ZnO glass and SiO₂-B₂O₃-Bi₂O₃ glass. The lead glass is glass containing PbO, and may be of any type. Examples thereof include SiO₂-PbO glass, SiO₂-PbO-B₂O₃ glass, and SiO₂-B₂O₃-PbO glass. The barium glass may be of any type, and examples thereof include BaO-SiO₂ glass.

The amorphous inorganic material may comprise only one type or multiple types of low-melting glass among the aforementioned types of low-melting glass.

The crystalline inorganic material contained in the surface coat layer of the exhaust system component has a higher softening point than the amorphous inorganic material contained in the surface coat layer of the exhaust system component. Specifically, the softening point of the crystalline inorganic material contained in the surface coat layer of the exhaust system component is preferably 950°C or higher.

The crystalline inorganic material particles 14 dispersed in the amorphous inorganic material layer 13 constituting the surface coat layer 12 are zirconia particles or crystalline inorganic material particles containing zirconia.

Specific examples of the zirconia-containing inorganic material include CaO-stabilized zirconia (5 wt% CaO-ZrO₂, 8 wt% CaO-ZrO₂, 31 wt% CaO-ZrO₂), MgO-stabilized zirconia (20 wt% MgO-ZrO₂, 24 wt% MgO-ZrO₂), Y₂O₃-stabilized zirconia (6 wt% Y₂O₃-ZrO₂, 7 wt% Y₂O₃-ZrO₂, 8 wt% Y₂O₃-ZrO₂, 10 wt% Y₂O₃-ZrO₂, 12 wt% Y₂O₃-ZrO₂, 20 wt% Y₂O₃-ZrO₂), zircon (ZrO₂-33 wt% SiO₂), and CeO-stabilized zirconia.

Preferred are Y₂O₃-stabilized zirconia, CaO-stabilized zirconia, and MgO-stabilized zirconia because they are excellent in heat resistance and corrosion resistance, and have a thermal conductivity at 25°C of 4 W/mK or lower.

The crystalline inorganic material particles 14 preferably contain 20% by weight or more of zirconia. This is because the particles containing 20% by weight or more of zirconia are excellent in heat resistance, and they easily react with the silica in the amorphous inorganic material to cause precipitation of reaction-derived particles containing zirconia and silica on the surface of the crystalline inorganic material particles 14.

If the amount of zirconia is less than 20% by weight, the reaction-derived particles 15 generated by the reaction between the particles 14 and the amorphous inorganic material layer 13 fail to grow sufficiently, deteriorating the effect of inhibiting the movement of the pores 16, as well as deteriorating the mechanical strength of the surface coat layer 12.

The crystalline inorganic material particles 14 more preferably contain 50% by weight or more of zirconia.

The crystalline inorganic material particles 14 preferably have an average particle size of 0.1 to 150 µm. The crystalline inorganic material particles 14 having an average particle size of 0.1 to 150 µm can inhibit the movement of the pores 16 even when the surface coat layer 12 is heated up to high temperature, making it possible to maintain high heat insulating ability.

The crystalline inorganic material particles 14 having an average particle size of smaller than 0.1 µm have difficulty in inhibiting the movement of the pores 16. In addition, such particles contain less zirconia and thus have difficulty in maintaining high heat resistance after drying. If the crystalline inorganic material particles 14 have an average particle size of greater than 150 µm, the surface of the surface coat layer 12 and the particles are close to each other at many sites. Thus, cracks easily occur on the surface even with a slight stress due to, for example, bending.

The average particle size of the crystalline inorganic material particles 14 is more preferably 1 to 50 µm. The particles 14 having an average particle size within this range can provide high heat resistance and prevent cracks, as well as allow the reaction-derived particles to have a shape tolerant to external loads. In other words, the reaction-derived particles are likely to have a thick needle shape, so that they are less likely to be folded or broken.

The ratio between the average pore size of the pores 16 and the average particle size of the crystalline inorganic material particles 14 ((average particle size of crystalline inorganic material particles)/(average pore size of pores)) is 0.1 to 10.

With a ratio between the average pore size of the pores 16 and the average particle size of the crystalline inorganic material particles 14 ((average particle size of crystalline inorganic material particles)/(average pore size of pores)) within the above range, the crystalline inorganic material particles 14 can serve as obstructions to the movement of the pores 16 when the surface coat layer 12 is heated up to high temperature, inhibiting the movement of the pores 16. This prevents the deterioration in heat insulating ability due to the union of the pores 16.

If the ratio ((average particle size of crystalline inorganic material particles)/(average pore size of pores)) is lower than 0.1, the ratio of the average particle size of the crystalline inorganic material particles is too small in relation to the average pore size of the pores. Thus, the particles have a small effect of inhibiting the movement of the pores at high temperature, so that the pores easily unite with each other, making it difficult to maintain high heat insulating ability.

If the ratio ((average particle size of crystalline inorganic material particles)/(average pore size of pores)) is higher than 10, in contrast, the ratio of the average particle size of the crystalline inorganic material particles is too high in relation to the average pore size of the pores. Thus, in this case, the crystalline inorganic material particles 14 may possibly press to break the pores 16, deteriorating the mechanical strength and heat insulating ability of the surface coat layer 12.

The ratio between the average pore size of the pores 16 and the average particle size of the crystalline inorganic material particles 14 ((average particle size of crystalline inorganic material particles)/(average pore size of pores)) is preferably 0.5 to 5.

The crystalline inorganic material contains zirconia and the amorphous inorganic material contains silica. Thus, in formation of the surface coat layer, the amorphous inorganic material layer and the crystalline inorganic material particles react with each other in the amorphous inorganic material layer to generate and precipitate reaction-derived particles comprising zircon and other substances.

Fig. 2 is a scanning electron microscopic (SEM) image showing a longitudinal section of the surface coat layer constituting the exhaust system component of the present invention. This SEM image shows reaction-derived particles which extend in the form of needles and which are generated by the reaction between the crystalline inorganic material and the amorphous inorganic material.

The SEM image of Fig. 2 shows the reaction-derived particles 15 extending in the form of needles from the surface of the crystalline inorganic material particles 14 in the amorphous inorganic material layer 13.

Although the reaction-derived particles 15 shown in Fig. 2 have a needle-like shape, they may have a crushed shape in accordance with the reaction conditions. As the reaction-derived particles 15 are generated, the size of the particles in the amorphous inorganic material layer 13 is represented by the sum of the size of the crystalline inorganic material particles 14 and the size of the reaction-derived particles 15. This more effectively prevents multiple pores 16 from uniting with each other at high temperature.

In the exhaust system component of the present invention, 5 to 50% by weight of the crystalline inorganic material particles 14 are preferably in contact with the pores having a pore size of 0.1 to 50 µm.

The pores 16 being in contact with or attaching to the crystalline inorganic material particles 14 are less likely to move away from the crystalline inorganic material particles 14 even at high temperature, so that the surface coat layer 12 can maintain high heat insulating ability. In the exhaust system component of the present invention, 20 to 40% by weight of the crystalline inorganic material particles 14 are more preferably in contact with the pores having a pore size of 1 to 50 µm.

If less than 5% by weight of the crystalline inorganic material particles 14 are in contact with the pores 16, the crystalline inorganic material particles 14 do not contribute to inhibition of the movement of the pores 16 and thus the pores 16 unite with each other, deteriorating the heat insulating ability. If more than 50% by weight of the crystalline inorganic material particles 14 are in contact with the pores 16, too many crystalline inorganic material particles 14 exist in the surface coat layer 12, deteriorating the mechanical strength or the heat insulating ability of the surface coat layer 12.

Assuming that the pores 16 having a size of smaller than 0.1 µm are in contact with the crystalline inorganic material particles 14, such a small size of pores lead to an increase in the number of pores in contact with the particles 14. As the number of pores in contact increases, the number of crack-generating sites in the surface coat layer increases. This causes problems such as poor quality and deterioration in mechanical strength. Assuming that the pores 16 having a pore size of larger than 50 µm are in contact with the crystalline inorganic material particles 14, the pores 16 are united pores after the movement, in many cases. As mentioned here, the surface coat layer 12 having the pores 16 with a large pore size formed therein contain less solid, so that the surface coat layer 12 has deteriorated mechanical properties. Further, such large pores 16 promote a heat release effect in the pores caused by convection heat transfer and radiant heat transfer, deteriorating the heat insulating ability.

In this case, as mentioned above, one pore 16 may be in contact with another pore 16 via the reaction-derived particles 15 extending from the crystalline inorganic material particles 14.

When the reaction-derived particles 15 are generated, the generated reaction-derived particles 15 extend from the surface of the crystalline inorganic material particles 14 toward the surroundings, so that they are likely to be in contact with the pores 16 and have many opportunities of contacting the pores 16. Thus, the pores 16 are less likely to move, more effectively preventing multiple pores 16 from uniting with each other.

The reaction-derived particles 15 preferably have an average particle size of 0.01 to 25 µm. The reaction-derived particles 15 having an average particle size of 0.01 to 25 µm, which extend from the crystalline inorganic material particles 14, inhibit the movement of the pores even when the surface coat layer 12 is heated up to high temperature, preventing the pores 16 from uniting with each other. The average particle size of the reaction-derived particles 15 is more preferably 0.1 to 15 µm. The reaction-derived particles 15 having an average particle size within this range are likely to have thick tips, having high mechanical strength.

The "average particle size of the reaction-derived particles" herein is determined as follows. Specifically, the longest distance from one tip to another tip of the reaction-derived particles generated from one particle is defined as the reaction-derived particle size. Then, different 100 reaction-derived particle sizes are measured and the average of these particle sizes is defined as the average particle size of the reaction-derived particles.

The reaction-derived particles 15 having an average particle size of smaller than 0.01 µm have a small effect of inhibiting the movement of the pores 16. If the reaction-derived particles 15 have an average particle size of larger than 25 µm, the reaction-derived particles 15 are so large in relation to the thickness of the surface coat layer 12 that the surface coat layer 12 needs to be thicker than necessary. Thus, the surface coat layer 12 has a higher bending stress and cracks easily occur.

As mentioned above, pores attributed to a pore-forming material contained in the material, namely, the paint for an exhaust system component, are dispersed in the amorphous inorganic material layer 13 constituting the surface coat layer 12. Here, the porosity of the surface coat layer 12 is preferably 30 to 80%.

With the surface coat layer 12 having a porosity of 30 to 80% in which the pores 16 are favorably dispersed, the pores 16 can effectively shield the heat transfer in the surface coat layer 12, making it possible to maintain good heat insulating ability.

The surface coat layer 12 having a porosity of lower than 30% contains so less pores 16 that it has deteriorated heat insulating ability. In contrast, the surface coat layer 12 having a porosity of higher than 80% contains so many pores 16 that, for example, the pores 16 easily emerge on the surface of the surface coat layer 12, making it difficult to maintain the porosity. Also, the pores 16 are so close to each other that the pores 16 easily unite with each other, making it difficult to maintain high heat insulating ability when the surface coat layer 12 is heated up to high temperature.

The average pore size of the pores 16 in the surface coat layer 12 is preferably 0.1 to 50 µm. The pores 16 having an average pore size of 0.1 to 50 µm in the surface coat layer 12 can effectively inhibit the heat transfer in the surface coat layer 12, so that the surface coat layer 12 can maintain high heat insulating ability. The smaller the average pore size of the pores 16 in the surface coat layer 12 is, the smaller the amount of heat moving in the pores by radiant heat transfer and convection heat transfer is. Thus, the average pore size is preferably as close to 1 µm as possible. Specifically, the average pore size is more preferably 1 to 50 µm, and still more preferably 1 to 5 µm. An average pore size within the range of 1 to 5 µm enables the least heat movement in the pores.

Pores 16 having an average pore size of smaller than 0.1 µm are technically difficult to form. Formation of such pores 16 requires use of a special material such as a very small pore-forming material. This unfavorably causes a significant increase in material cost.

In contrast, pores 16 having a pore size of larger than 50 µm may be united pores after the movement, in many cases. As mentioned here, the surface coat layer 12 having pores 16 with a large pore size formed therein contains less solid therein, having low mechanical properties. Further, pores 16 having a size of larger than 100 µm promote a heat release effect due to convection heat transfer and radiant heat transfer in the pores, deteriorating the heat insulating ability.

The surface coat layer 12 preferably has a thickness of 50 to 2000 µm, and more preferably 250 to 2000 µm. The surface coat layer 12 having a thickness of smaller than 50 µm are too thin to exert sufficient heat insulating ability when used as an exhaust system component. The surface coat layer 12 having a thickness of larger than 2000 µm is excessively thick. In this case, the temperature of the interface between the surface coat layer 12 and the base 11 tends to greatly be different from the temperature of the surface exposed to the air when the structure undergoes thermal shock, causing easy breakage of the surface coat layer 12.

The surface coat layer 12 preferably has a thermal conductivity at room temperature of 0.05 to 2 W/mK.

With the surface coat layer 12 having a thermal conductivity at room temperature of 0.05 to 2 W/mK, the exhaust system component 10 of the present invention is excellent in heat insulating ability and the thermal conductivity thereof is less likely to increase even at high temperature. This prevents a decrease in temperature of exhaust gas, for example.

In consideration of the balance between the technical viewpoint and the economical viewpoint, it is difficult to provide a surface coat layer 12 having a thermal conductivity at room temperature of lower than 0.05 W/mK. In contrast, if the thermal conductivity at room temperature of the surface coat layer 12 exceeds 2 W/mK, an exhaust pipe has insufficient heat retention at a low temperature region. For example, when the surface coat layer is used for an exhaust pipe, it unfavorably takes long time to heat a catalytic converter up to the catalyst activation temperature.

The thermal conductivity at room temperature of the surface coat layer of the exhaust system component can be determined by the laser flash method.

Also in the case that the exhaust system component of the present invention comprises a semi-cylindrical base or a cylindrical base, the surface coat layer 12 in the exhaust system component 10 illustrated in Fig. 1 is formed on the surface of the base 11. The surface coat layer 12 may be formed on both surfaces of the base 11.

Even in the case that the surface coat layer 12 is formed on each surface of the base 11, each surface coat layer 12 preferably has a thickness of 50 to 2000 µm.

Next, a method of producing the exhaust system component of the present invention is described.

First described is a paint for producing an exhaust system component used in production of the exhaust system component of the present invention. The paint for an exhaust system component is a material composition used in production of the exhaust system component.

The paint for an exhaust system component of the present invention comprises an amorphous inorganic material containing silica, crystalline inorganic material particles containing zirconia, and pore-forming material particles, the crystalline inorganic material particles having an average particle size of 0.1 to 150 µm, the weight of the crystalline inorganic material particles for 100 parts by weight of the amorphous inorganic material being 30 to 180 parts by weight, the pore-forming material particles having an average particle size of 0.1 to 25 µm, and the weight of the pore-forming material particles for 100 parts by weight of the amorphous inorganic material being 0.001 to 1 parts by weight.

The paint for producing an exhaust system component of the present invention enables production of the exhaust system component of the present invention. Here, the paint can be used not only in production of an exhaust system component but also in any other processes of forming a coating film.

As mentioned above, the paint for an exhaust system component comprises the amorphous inorganic material containing silica, the crystalline inorganic material particles containing zirconia, and the pore-forming material particles.

The types, materials, properties and the like of the amorphous inorganic material including silica have already been described for the exhaust system component of the present invention, and are therefore not described again here. As described above, the amorphous inorganic material is used in the form of powder in preparation of the paint for an exhaust system component of the present invention. In preparation of the paint for an exhaust system component of the present invention, the materials are first mixed with each other and the mixture is wet-ground. Here, the particle size of the powder of an amorphous inorganic material used is preliminarily adjusted to an appropriate particle size, and the powder of mixture is made to have a desired particle size through the wet grinding.

Since the amorphous inorganic material is to be formed into a coat (layer) on the surface of the base through coating, firing, and melting steps, the particle size of the amorphous inorganic material is not required to be exactly adjusted. The amorphous inorganic material particles, however, need to be uniformly dispersed in the paint for an exhaust system component.

In order to achieve this purpose, the amorphous inorganic material after the wet grinding preferably has a final average particle size of 0.1 to 100 µm, and more preferably from 1 to 20 µm. The particles having an average particle size within the range of 1 to 20 µm tend to be uniformly dispersed. This is presumably because the particles having such an average particle size are less affected by the electricity charged on the surface thereof.

Also, the types, materials, properties and the like of the crystalline inorganic material containing zirconia have already been described for the exhaust system component of the present invention, and are therefore not described again here. In preparation of the paint for an exhaust system component of the present invention, the materials are first mixed with each other and the mixture is wet-ground. Also in the case of the crystalline inorganic material, the particle size of the material used is preliminarily adjusted to an appropriate particle size, and the mixture is made to have a desired particle size through the wet grinding.

The final average particle size of the wet-ground crystalline inorganic material is preferably 0.1 to 150 µm.

The average particle size of the wet-ground crystalline inorganic material particles is 0.1 to 150 µm. The particle size of the crystalline inorganic material dispersed in the amorphous inorganic material layer after the formation of the surface coat layer is considered to be substantially equal to that of the wet-ground crystalline inorganic material particles before the formation of the amorphous inorganic material layer. The average particle size of the crystalline inorganic material particles dispersed in the amorphous inorganic material layer after the formation of the surface coat layer is 0.1 to 150 µm. Thus, the crystalline inorganic material particles 14 inhibit the movement of the pores 16 even when the surface coat layer 12 is heated up to high temperature, so that the surface coat layer can maintain high heat insulating ability. The average particle size of the wet-ground crystalline inorganic material particles is more preferably 1 to 50 µm.

Particles 14 of crystalline inorganic material having an average particle size of smaller than 0.1 µm have difficulty in inhibiting the movement of the pores 16. Further, such particles contain less zirconia, so that the surface coat layer has difficulty in maintaining high heat resistance after drying. If the crystalline inorganic material particles 14 has an average particle size of larger than 150 µm, the surface of the surface coat layer 12 and the crystalline inorganic material particles 14 are too close to each other at many sites. Thus, even a slight stress such as bending easily causes cracks on the surface. This trend is particularly obvious with crystalline inorganic material particles 14 having an average particle size of larger than 500 µm.

The weight of the crystalline inorganic material particles for 100 parts by weight of the amorphous inorganic material is adjusted to 30 to 180 parts by weight.

With such a weight of the crystalline inorganic material particles for the amorphous inorganic material, the crystalline inorganic material particles are dispersed at an appropriate ratio in the amorphous inorganic material layer constituting the exhaust system component produced, securing the heat resistance and the heat insulating ability of the surface coat layer. The weight of the crystalline inorganic material particles for 100 parts by weight of the amorphous inorganic material is preferably adjusted to 60 to 150 parts by weight.

If the weight of the crystalline inorganic material particles for 100 parts by weight of the amorphous inorganic material is less than 30 parts by weight, a less amount of the crystalline inorganic material particles are dispersed in the amorphous inorganic material layer, so that the pores dispersed inside easily move at high temperature, deteriorating the heat insulating ability.

If the weight of the crystalline inorganic material particles for 100 parts by weight of the amorphous inorganic material is more than 180 parts by weight, the relative amount of the amorphous inorganic material is inversely small. This makes it difficult to form a coat (a surface coat layer) and the resulting coat is likely to be peeled off the base.

Next described is the pore-forming material in the paint for an exhaust system component of the present invention.

The pore-forming material is used for forming pores in the surface coat layer which is formed by applying the paint for an exhaust system component on a base surface and then heating and firing the paint applied.

Examples of the pore-forming material include balloons which are fine hollow spheres mainly containing oxide-based ceramics; spherical acrylic particles; carbon such as graphite; carbonates; and foaming agents. In the present invention, the resulting surface coat layer preferably has high heat insulating ability. In order to achieve this purpose, preferably, pores which are as small as possible are uniformly dispersed.

In order to achieve this purpose, the pore-forming material is preferably carbon, a carbonate, or a foaming agent.

Examples of the carbonate and the foaming agent include CaCO₃, BaCO₃, NaHCO₃, Na₂CO₃, and (NH₄)₂CO₃.

Preferable among these pore-forming materials are carbon such as graphite. This is because carbon can be dispersed as fine particles in the paint for an exhaust system component by pulverization or the like treatment; carbon is decomposed by heating and firing; and carbon enables formation of pores having a favorable pore size.

In order to achieve these purposes, the average particle size of the pore-forming material particles is adjusted to 0.1 to 25 µm.

The pore-forming material particles having an average particle size of 0.1 to 25 µm allow the resulting pores in the amorphous inorganic material layer to have a size of 0.1 to 50 µm. The average particle size of the pore-forming material particles is preferably adjusted to 0.5 to 10 µm.

The pore-forming material particles having an average particle size of smaller than 0.1 µm are difficult to disperse favorably in the paint for an exhaust system component. This results in a poor degree of dispersion of pores in the resulting amorphous inorganic material layer, so that the pores easily unite with each other at high temperature. The pore-forming material particles having an average particle size of larger than 25 µm form so large pores in the amorphous inorganic material layer that the amorphous inorganic material layer has deteriorated heat insulating ability.

The weight of the pore-forming material particles for 100 parts by weight of the amorphous inorganic material is adjusted to 0.001 to 1 part by weight. Since the weight of the pore-forming material particles for 100 parts by weight of the amorphous inorganic material is adjusted to 0.001 to 1 part by weight, the particles are favorably dispersed in the paint for an exhaust system component. Further, the surface coat layer formed by applying the paint on the base surface to form a coating, and then heating and firing the coating can have pores favorably dispersed therein. The weight of the pore-forming material particles for 100 parts by weight of the amorphous inorganic material is preferably adjusted to 0.005 to 0.5 parts by weight.

If the weight of the pore-forming material particles for 100 parts by weight of the amorphous inorganic material is smaller than 0.001 parts by weight, the ratio of the pores in the surface coat layer is so low that the surface coat layer fails to have good heat insulating ability. If the weight of the pore-forming material particles for 100 parts by weight of the amorphous inorganic material is larger than 1 part by weight, the ratio of the pore-forming material is so high that the pores are difficult to favorably disperse in the resulting surface coat layer, and pores are likely to be so large that the surface coat layer fails to exert good heat insulating ability.

In addition to the amorphous inorganic material, the crystalline inorganic material, and the pore-forming material, the paint for an exhaust system component of the present invention may further contain a dispersion medium, an organic binder, and other components.

Examples of the dispersion medium include water and organic solvents such as methanol, ethanol, and acetone. The ratio of the dispersion medium to the powder mixture or the powder of the amorphous inorganic material in the paint for the exhaust system component is not particularly limited. It is preferably from 50 to 150 parts by weight for 100 parts by weight of the powder of the amorphous inorganic material. This is because such a ratio can give a viscosity suitable for applying the paint to the base.

Examples of the organic binder that can be mixed into the paint for the exhaust system component include polyvinyl alcohol, methyl cellulose, ethyl cellulose, and carboxymethyl cellulose. These may be used alone or in combination.

Also, the dispersion medium and the organic binder(s) may be used in combination.

Next described are preparation of the aforementioned paint for an exhaust system component and a method of producing an exhaust system component using the paint.

### (1) Preparation of base made of metal

A base made of metal (hereinafter, also referred to as a metal base or a metal material) as a starting material is subjected to a washing treatment for removal of impurities on the surface of the metal base.

Any conventionally known washing treatment can be performed. Specific examples thereof include ultrasonic washing in an alcohol solvent.

After the washing treatment, the surface of the metal base may be subjected to a roughening treatment, if necessary, so as to increase the specific surface area of the metal base or to adjust the surface roughness of the metal base. Specific examples thereof include sandblasting, etching, and high-temperature oxidation. These treatments may be performed alone or in combination.

After the roughening treatment, the washing treatment may further be performed.

### (2) Formation of surface coat layer

A crystalline inorganic material, an amorphous inorganic material, pore-forming material, and other materials are mixed to prepare a paint for an exhaust system component.

Specifically, for example, powder of the crystalline inorganic material and powder of the amorphous inorganic material are prepared such that they each have a predetermined particle size, shape, and other properties. These powders are dry-blended in a predetermined ratio to prepare a powder mixture. Water is added to the mixture and the mixture is then wet-mixed using a ball mill. The paint for the exhaust system component is thereby prepared.

Here, the ratio between the powder mixture and water is not limited. Preferably, 100 parts by weight of the powder mixture is mixed with about 100 parts by weight of water. This is because such a ratio can give a viscosity suitable for applying the paint to the metal base. Also, if necessary, the paint for the exhaust system component may contain additives such as a dispersion medium (e.g. organic solvent) and an organic binder.

(3) Next, the paint for an exhaust system component is applied to the surface of the metal base.

Specific examples of the method of applying the paint for an exhaust system component for a surface coat layer include spray coating, electrostatic coating, inkjet printing, transfer printing with such an instrument as a stamp or a roller, brush coating, and electrodeposition.

The metal base may be immersed in the paint for an exhaust system component to be coated with the paint.

(4) Then, the metal base coated with the paint for an exhaust system component is subjected to a firing treatment.

Specifically, the metal base coated with the paint for an exhaust system component is dried, heated, and fired, so that a surface coat layer is formed. At this time, the pore-forming material is decomposed or foams into gas by the above firing, thereby forming pores in the surface coat layer. The pore-forming material preferably gasifies at 600°C to 1000°C.

The firing temperature is preferably not lower than the softening point of the amorphous inorganic material. Thus, the firing temperature is preferably from 700°C to 1100°C although it depends on the type of the amorphous inorganic material and the type of the pore-forming material. This is because a firing temperature of not lower than the softening point of the amorphous inorganic material allows the metal base and the amorphous inorganic material to adhere firmly to each other, forming a surface coat layer firmly adhering to the metal base.

The above procedure enables production of an exhaust system component 10 illustrated in Fig. 1, which is one example of the exhaust system component of the present invention.

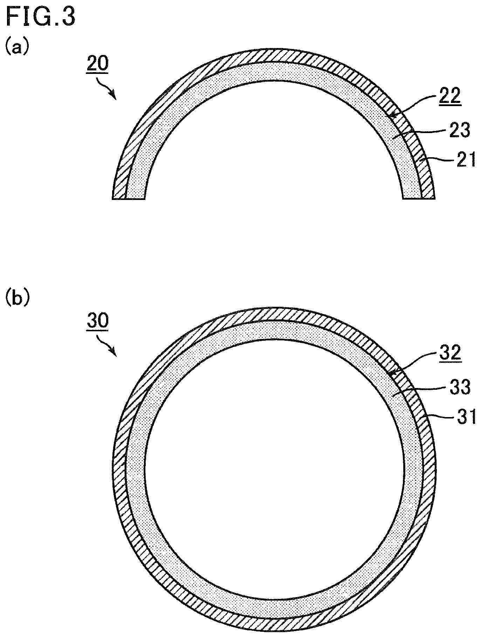

Fig. 3(a) is a cross-sectional view schematically illustrating a member obtained by cutting in half a tubiform body as a base serving as an exhaust system component (hereinafter, such a member is referred to as a half-cut member); Fig. 3(b) is a cross-sectional view schematically illustrating the exhaust system component whose base is a tubiform body.

An exhaust system component 30 illustrated in Fig. 3(b) includes a base 31 that is a tubiform body (an exhaust pipe), and the base 31 has, on its inside, a surface coat layer 32 having the same structure as the surface coat layer shown in Fig. 1.

Such an exhaust pipe including the surface coat layer thus has excellent heat insulating ability. Therefore, use of this exhaust pipe enables an increase in the temperature of a catalytic converter to the catalyst activation temperature in a short time from the start of the engine, allowing the catalytic converter to exert its performance sufficiently from the start of the engine.

The following describes one example of a method of producing such an exhaust system component including a tubiform body as a base and a surface coat layer disposed inside the tubiform body.

With a long exhaust system component (tubiform body) 30 illustrated in Fig. 3(b), it is difficult, though not impossible, to form a surface coat layer on the entire inner surface. Hence, generally, an exhaust system component (half-cut member) 20 (illustrated in Fig. 3(a)) prepared by cutting in half the tubiform base constituting the exhaust system component is used.

In this case, an amorphous inorganic material layer 23 to constitute a surface coat layer 22 is formed on the surface of a base 21, and then two exhaust system components (half-cut members) 20 are combined together to form an exhaust system component 30 comprising a tubiform body as a base 31 and a surface coat layer 32 formed on the inner surface of the base 31.

First, a tubiform body is halved into a first half-cut member and a second half-cut member as metal bases. Next, the paint for an exhaust system component is applied to the surface with a smaller area, i.e., the inner surface, of each of the first half-cut member and the second half-cut member. The first half-cut member and the second half-cut member are then fired, so that a surface coat layer is formed on each of the first half-cut member and the second half-cut member. Thereafter, the first half-cut member and the second half-cut member are bonded to each other by, for example, welding, whereby a tubiform body is produced.

This procedure enables production of an exhaust system component including a tubiform body as the metal base and a surface coat layer disposed on the inner surface of the tubiform body.

An exhaust system component may comprise a tubiform metal base and a surface coat layer disposed on the outer surface of the tubiform base. In this case, the metal base may be a tubiform metal base or may be a combination of the aforementioned first half-cut member and second half-cut member.

The effects of the exhaust system component of the present invention and the paint for an exhaust system component are listed below.
(1) In the exhaust system component of the present invention, a surface coat layer is formed on the surface of a base made of metal. The surface coat layer comprises an amorphous inorganic material layer containing silica, and crystalline inorganic material particles containing zirconia, reaction-derived particles generated by the reaction between the crystalline inorganic material particles and the amorphous inorganic material layer, and pores, each dispersed inside the amorphous inorganic material layer. The pores existing in the surface coat layer inhibit heat conduction inside the solid, resulting in excellent heat insulating ability.
(2) In the exhaust system component of the present invention, the crystalline inorganic material particles are dispersed in the surface coat layer, and the ratio between the average pore size of the pores and the average particle size of the crystalline inorganic material particles ((average particle size of crystalline inorganic material particles)/(average pore size of pores)) is 0.1 to 10. Thus, the crystalline inorganic material particles serve as obstructions to the movement of the pores when the surface coat layer is heated up to high temperature, preventing the pores from moving. This prevents the deterioration in heat insulating ability due to the union of pores. As a result, the surface coat layer can maintain high heat insulating ability for a long time.
(3) In the exhaust system component of the present invention, the crystalline inorganic material particles in the surface coat layer play a role of reinforcing the mechanical properties of the surface coat layer and preventing the pores from uniting with each other. This prevents defects such as cracks due to deterioration in mechanical strength of the surface coat layer, and growth of cracks even if defects such as cracks occur.
(4) In the exhaust system component of the present invention, the surface coat layer contains crushed or needle-like reaction-derived particles generated by the reaction between the crystalline inorganic material particles and the amorphous inorganic material layer. Such reaction-derived particles inhibit the movement of the pores, so that the surface coat layer can maintain high heat insulating ability.
   As mentioned above, the exhaust system component of the present invention is excellent in heat insulating ability and heat resistance, and thus can favorably be used as, for example, an exhaust system component such as an exhaust pipe.
(5) In the exhaust system component of the present invention, 5 to 50% by weight of the crystalline inorganic material particles are in contact with the pores having a pore size of 0.1 to 50 µm. Thus, the pores are less likely to move away from the crystalline inorganic material particles even at high temperature, so that the pores are prevented from uniting with each other and the surface coat layer can maintain high heat insulating ability.
(6) In the exhaust system component of the present invention, the crystalline inorganic material contained in the surface coat layer contains 20% by weight of zirconia.
   Zirconia is a crystalline inorganic material excellent in heat resistance. Thus, zirconia existing in the surface coat layer of the exhaust system component is less likely to soften even when the surface coat layer of the exhaust system component is exposed to high temperature, preventing the surface coat layer from peeling off the base made of metal.
   Further, zirconia is a crystalline inorganic material also excellent in corrosion resistance. Thus, when the surface coat layer of the exhaust system component is directly exposed to high-temperature exhaust gas, the surface coat layer of the exhaust system component is prevented from corrosion caused by nitrogen oxide (NOx) and/or sulfur oxide (SOx) contained in the exhaust gas.
(7) In the exhaust system component of the present invention, the surface coat layer has a thickness of 50 to 2000 µm.
   In the surface coat layer having a thickness within the above range, the ratio of the pore size to the thickness of the surface coat layer and the ratio of the particle size of the crystalline inorganic material to the thickness of the surface coat layer each fall within a preferable range. Thus, the surface coat layer can more favorably maintain the heat insulating ability and the mechanical properties.
(8) In the exhaust system component of the present invention, the surface coat layer has a thermal conductivity at room temperature of 0.05 to 2 W/mK.
   A thermal conductivity at room temperature of the surface coat layer of the exhaust system component of 0.05 to 2 W/mK can reduce the rate of heat conduction toward the outside of the exhaust system component through the surface coat layer. Thus, the exhaust system component can have higher heat insulating ability.
(9) In the exhaust system component of the present invention, the surface coat material layer has a porosity of 30 to 80%, and the pores have an average pore size of 0.1 to 50 µm.
   Such ranges of the porosity and the average pore size of the pores are appropriate to maintain the heat insulating ability of the surface coat layer owing to the pores in the surface coat layer. As a result, the exhaust system component of the present invention can maintain good heat insulating ability.
(10) The paint for an exhaust system component of the present invention comprises amorphous inorganic material containing silica, crystalline inorganic material particles containing zirconia, and pore-forming material particles, the crystalline inorganic material particles having an average particle size of 0.1 to 150 µm, the weight of the crystalline inorganic material particles for 100 parts by weight of the amorphous inorganic material being 30 to 180 parts by weight, the pore-forming material particles having an average particle size of 0.1 to 25 µm, and the weight of the pore-forming material particles for 100 parts by weight of the amorphous inorganic material being 0.001 to 1 parts by weight. Thus, it can favorably be used as a paint for the exhaust system component having the aforementioned properties.

### (Examples)

The following examples show the exhaust system component and the paint for an exhaust system component of the present invention in detail. These examples, however, are not intended to limit the scope of the present invention.

### (Example 1)

### (1) Preparation of base

A plate-shaped stainless steel (SUS430) base having a size of 40 mm (length) x 40 mm (width) x 1.5 mm (thickness) was prepared as a metal base. This metal base was ultrasonically washed in an alcohol solvent, and subsequently sandblasted so that the surfaces (on both sides) of the metal base were roughened. The sandblasting was performed using Al₂O₃ abrasive grains of #100 for 10 minutes.

The surface roughness of the metal base was determined using a surface-roughness measuring device (HANDY SURF E-35B, Tokyo Seimitsu Co., Ltd.) to be Rz_{JIS} = 8.8 µm.

The plate-shaped base was produced by the above treatments.

### (2) Preparation of paint for exhaust system component for surface coat layer

K4006A-100M (Bi₂O₃-B₂O₃ glass, softening point: 770°C, Asahi Glass Co., Ltd.) in an amount of 35 parts by weight was prepared as a powder of an amorphous inorganic material. The ratio of the amorphous inorganic material to the whole paint for the exhaust system component was 34% by weight. This ratio is a ratio of the amorphous inorganic material expressed in percentage in the total weight of the paint for an exhaust system component which includes materials such as water. The powder of the amorphous inorganic material had an average particle size of 15 µm and contained 25% by weight of silica.

Yttria-stabilized zirconia (20 parts by weight) containing 8% by weight of yttria was prepared as crystalline inorganic material particles. The average particle size of the crystalline inorganic material particles was 25 µm.

Methyl cellulose (product name: METOLOSE-65SH, Shin-Etsu Chemical Co., Ltd.) in an amount of 0.5 parts by weight was prepared as an organic binder.

In preparation of the paint for an exhaust system component to be used in formation of a surface coat layer, 46 parts by weight of water was further added to the paint. The materials were wet-mixed with a ball mill, whereby a paint for an exhaust system component was prepared.

In preparation of the paint for an exhaust system component, 0.005 parts by weight of carbon was added as a pore-forming material. The average particle size of the pore-forming material was 1 µm.

The base to be coated, the surface to be coated (one or both), the type, average particle size, and ratio of the crystalline inorganic material, the ratio of the amorphous inorganic material, and the average particle size and ratio of the pore-forming material are shown in Table 1.

When the crystalline inorganic material, the amorphous inorganic material, and the pore-forming material are collected while maintaining the shape of particles, the particle sizes can be determined using a device utilizing laser diffraction (SALD-300V, Shimadzu Corp.). The average particle sizes can be determined as follows. The sizes of 100 particles are measured using the device, and the average value of the measured particle sizes is calculated. This average value is defined as the average particle size.

When the surface coat layer is formed on an exhaust pipe and the crystalline inorganic material and the reaction-derived particles cannot be collected while maintaining the shape of particles, the particle sizes can be determined using the following 3D measuring X-Ray CT device, and the average particle size can be calculated based on the resulting data.

In this case, a sample in a size of 3.1 mm cut out of the surface coat layer was measured using a 3D measuring X-Ray CT device (TDM1000-IS/SP, Yamato Scientific Co., Ltd.). The resulting image was processed with 3D volume rendering software (VG-Studio MAX, Nihon Visual Science, Inc. (NVS)), and the particle size can be measured on the processed image. Here, the particle size means the longest distance between any two points on the surface of one particle. The particle sizes of 100 samples collected from the surface coat layer are measured by the above measurement method, and the average value of these particle sizes is defined as the average particle size.

### (3) Production of exhaust system component

The prepared paint for an exhaust system component was applied to one surface of a plate-shaped base by spray coating, and dried at 70°C for 20 minutes in a drying device. The dried composition was then heated and fired in the air at 850°C for 90 minutes, forming a 500-µm-thick surface coat layer.

### (Examples 2 to 5)

A surface coat layer was formed in substantially the same manner as in Example 1 except that the type of a base to be coated, the type, average particle size, and ratio of the crystalline inorganic material, the ratio of the amorphous inorganic material, the average particle size and ratio of the pore-forming material, and the thickness of the resulting surface coat layer were as shown in Table 1 and Table 2. The base to be coated, the surface to be coated (one or both), the type, average particle size, and ratio of the crystalline inorganic material, the ratio of the amorphous inorganic material, and the average particle size and ratio of the pore-forming material are shown in Table 1.

### (Comparative Examples 1 to 4 and Reference Example 1)

A surface coat layer was formed in substantially the same manner as in Example 1 except that the type of a base to be coated, the type, average particle size, and ratio of the crystalline inorganic material, the ratio of the amorphous inorganic material, the average particle size and ratio of the pore-forming material, and the thickness of the resulting surface coat layer were as shown in Table 1 and Table 2. The base to be coated, the surface to be coated (one or both), the type, average particle size, and ratio of the crystalline inorganic material, the ratio of the amorphous inorganic material, and the average particle size and ratio of the pore-forming material are shown in Table 1.

**[Table 1]**

| | Base to be coated | Surface to be coated | Crystalline inorganic material | | | Amorphous inorganic material | Pore-forming material | |
|---|---|---|---|---|---|---|---|---|
| | | | Type | Average particle size | Ratio | Ratio | Average particle size | Ratio |
| | | | | (*µ*m) | (wt%) | (wt%) | (*µm*) | (wt%) |
| Example 1 | Plate | One | Yttria-stabilized zirconia (Y₂O₃: 8 wt%) | 10 | 20 | 34 | 1 | 0.005 |
| Example 2 | Cylinder | One | Caloie-stabilized zirconia (CaO: 5 wt%) | 0.1 | 20 | 34 | 0.5 | 0.007 |
| Example 3 | Half-out member | One | Magnesia-stabilized zirconia (MgO: 20 wt%) | 150 | 40 | 25 | 10 | 0.005 |
| Example 4 | Cylinder | One | Zirconia | 50 | 15 | 35 | 5 | 0.012 |
| Example 5 | Cylinder | Both | Zircon (SiO₂: 10 wt%) | 1 | 20 | 34 | 5 | 0.014 |
| Comparative Example 1 | Plate | One | No crystalline inorganic material | - | 0 | 45 | 1 | 0.005 |
| Comparative Example 2 | Cylinder | One | Yttria-stabilized zirconia (Y₂O₃: 8 wt%) | 1 | 70 | 13 | 25 | 0.005 |
| Comparative Example 3 | Plate | One | Yttria-stabilized zirconia (Y₂O₃: 8 wt%) | 25 | 5 | 40 | 10 | 0.007 |
| Comparative Example 4 | Cylinder | One | Alumina (Al₂O₃) | 10 | 10 | 38 | 5 | 0.005 |
| Reference Example 1 | Plate | One | Yttria-stabilized zirconia (Y₂O₃: 8 wt%) | 25 | 20 | 35 | 5 | 0.005 |

For the exhaust system components produced in Examples 1 to 5, Comparative Examples 1 to 4, and Reference Example 1, the properties (porosity, thermal conductivity, thickness, initial film formability, results of continuous high temperature test, results of thermal shock resistance test, and results of comprehensive evaluation) of the surface coat layer are collectively shown in Table 2.

The porosity, thermal conductivity, thickness, initial film formability, results of continuous high temperature test, results of thermal shock resistance test, and results of comprehensive evaluation of the surface coat layer were determined by the following methods.

### (Determination of thermal conductivity of surface coat layer)

The thermal conductivities (25°C) of the respective surface coat layers of the exhaust system components in Examples 1 to 5, Comparative Examples 1 to 4, and Reference Example 1 were determined using a laser flash device (a device for measuring thermal constants LFA457 Microflash, NETZSCH).

The thermal conductivity (25°C) of a base (stainless-steel base) was determined in the same manner to be 25 W/mK.

### (Determination of porosity of surface coat layer)

A sample in a size of 3.1 mm cut out of the surface coat layer was measured using a 3D measuring X-ray CT device (TDM1000-IS/SP, Yamato Scientific Co., Ltd.). The resulting image was processed with 3D volume rendering software (VG-Studio MAX, Nihon Visual Science, Inc. (NVS)), and the pore volume can be measured on the processed image, so that the porosity can be calculated. On the basis of the above determination method, 100 samples were collected from each of the surface coat layers of the exhaust system components produced in Examples 1 to 5, Comparative Examples 1 to 4, and Reference Example 1. The average value of the porosities was defined as the porosity of the surface coat layer of the exhaust system component.

### (Measurement of thickness)

The thickness of the surface coat layer was measured using DUALSCOPE MP40 from Fischer Instruments K.K.

### (Evaluation of initial film formability)

Ten SEM images of the interface between the base and the surface coat layer disposed on the surface of the base were taken with a scanning electron microscope (Hitachi Chemical Co., Ltd., FE-SEM S-4800). Using the SEM images, the initial film formability was evaluated. If a gap was formed between the surface coat layer and the base and peeling was observed, the initial film formability was evaluated as "×". If no gap was formed between the base and the surface coat layer, the initial film formability was evaluated as "○".

### (Continuous high temperature test)

The exhaust system components of Examples 1 to 5, Comparative Examples 1 to 4, and Reference Example 1 were subjected to a continuous high temperature test, so that the heat resistance of the respective surface coat layers was evaluated.

A 40 mm × 40 mm test piece was prepared, and a surface coat layer was formed on half (40 mm × 20 mm) of the test piece. In this state, the surface coat layer was turned upward, and then inclined 90° from the horizontal direction and put into a firing furnace. The workpiece was maintained at 1000°C for 15 minutes. Thereafter, on the base surfaces of the respective exhaust system components, the presence or absence of downward dripping of the layer and falling or deformation of the layer were confirmed. Downward dripping was evaluated on the basis of the presence or absence of a change at the boundary between the portion where the surface coat layer was formed and the portion where the surface coat layer was not formed before and after the evaluation. Falling or deformation of the surface coat layer was visually confirmed.

In the item "Results of continuous high temperature test" of Table 2, the symbol "×" means that one of thickness change (downward dripping), falling, and deformation of the surface coat layer of the exhaust system component occurred in the heat resistance test; the symbol "○" means that no thickness change (downward dripping), falling, nor deformation of the surface coat layer of the exhaust system component occurred.

### (Results of thermal shock resistance test)

The thermal shock resistance of the respective exhaust system components in Examples 1 to 5, Comparative Examples 1 to 4, and Reference Example 1 was evaluated by the following thermal shock resistance test.

The exhaust system component was heated up to 900°C in a firing furnace, and then the exhaust system component at 900°C was taken out of the furnace to the outside at room temperature. The exhaust system component was compulsorily dried using a fan such that an average temperature-decreasing rate during two minutes from the taking out was 200 to 210°C/min. This operation constitutes one cycle, and this cycle was repeated 50 times. Thereafter, the presence or absence of peeling off of the surface coat layer of the exhaust system component was visually confirmed.

In the item "Results of thermal shock resistance test" in Table 2, the symbol "x" means that the surface coat layer was peeled off the exhaust system component, and the symbol "○" means that the surface coat layer was not peeled off the exhaust system component.

### (Comprehensive evaluation)

With respect to the aforementioned initial film formability, results of continuous high temperature test, results of thermal shock resistance test, and determination results of thermal conductivity, the cases where all the items were evaluated as "○" were evaluated as "passed", whereas the cases where at least one property was evaluated as "×" were evaluated as "not passed". For the thermal conductivity, the value of lower than 0.6 W/mK was evaluated as good, whereas the value of not lower than 0.6 W/mK was evaluated as poor.

**[Table 2]**

| | Surface coat layer | | | | Results of continuous high temperature test | Results of thermal shock resistance test | Comprehensive evaluation |
|---|---|---|---|---|---|---|---|
| | Porosity (%) | Thermal conductivity (W/mK) | Thickness (*µ*m) | Initial film formability | | | |
| Example 1 | 30 | 0.40 | 500 | ○ | ○ | ○ | Passed |
| Example 2 | 50 | 0.30 | 500 | ○ | ○ | ○ | Passed |
| Example 3 | 30 | 0.40 | 250 | ○ | ○ | ○ | Passed |
| Example 4 | 70 | 0.10 | 750 | ○ | ○ | ○ | Passed |
| Example 5 | 70 | 0.20 | 2000 | ○ | ○ | ○ | Passed |
| Comparative Example 1 | 30 | 0.35 | 500 | ○ | × | × | Not passed |
| Comparative Example 2 | 30 | 0.45 | 500 | × | ○ | × | Not passed |
| Comparative Example 3 | 40 | 0.30 | 500 | ○ | × | ○ | Not passed |
| Comparative Example 4 | 30 | 4.40 | 250 | ○ | ○ | ○ | Not passed |
| Reference Example 1 | 30 | 0.40 | 3000 | ○ | ○ | × | Not passed |

For each of the surface coat layers of the exhaust system components of Examples 1 to 5, the porosity was 30 to 70%, the thermal conductivity was as low as 0.10 to 0.40 W/mK, the heat insulating ability was excellent, the thickness was within an appropriate range of 250 to 2000 µm, the results of evaluating the initial film formability was good and no peeling of the surface coat layer was observed, and the adhesiveness with the base was excellent. The surface coat layers also showed good results in the continuous high temperature test and thermal shock resistance test. The pores were less likely to unite with each other even at high temperature, so that the surface coat layers were found to be excellent in heat resistance, thermal shock resistance, and durability.

In particular, as shown in Example 5, even though a thick surface coat layer was formed on the base surface, this surface coat layer showed good initial film formability and had a thermal conductivity of 0.20 W/mK; in other words, it was very excellent in heat insulating ability.

In the exhaust system component of Comparative Example 1, in contrast, the surface coat layer contained no crystalline inorganic material. Thus, the heat resistance seemed to be poor and the pores seemed to easily unite with each other. Further, the results of continuous high temperature test and thermal shock resistance test were poor, failing to pass the evaluations. In Comparative Example 2, the amount of the crystalline inorganic material was so large and the amount of the amorphous inorganic material was so small that the initial film formability was poor and the adhesiveness with the base was unacceptable.

In Comparative Example 3, the amount of the crystalline inorganic material was so small that the heat resistance was poor and the results of continuous high temperature test were poor. In Comparative Example 4, the crystalline inorganic material was alumina, which hardly contains silica, so that no reaction-derived particles were generated. Thus, the thermal conductivity was low and poor. In Reference Example 1, the thickness of the surface coat layer was as thick as 3000 µm, so that the results of thermal shock resistance test were poor.

The following will describe one specific example of the exhaust system component of the present invention with reference to the drawings.

The exhaust system component of the present invention is an exhaust pipe used as a member constituting the exhaust system that is connected to an internal combustion engine such as an engine for passenger cars. The structure of the exhaust system component to be described below is the same as that of the exhaust system component described above except that the base is a tubiform body.

Specifically, the exhaust system component of the present invention can suitably be used as an exhaust manifold, for example.

The exhaust system component of the present invention will be described below based on one exemplary exhaust manifold connected to an internal combustion engine such as an engine for passenger cars.

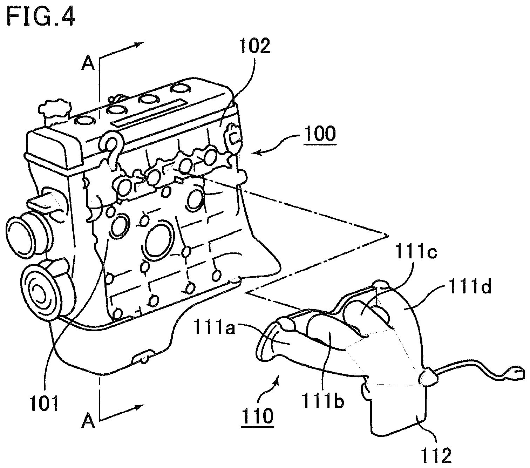

Fig. 4 is an exploded perspective view schematically illustrating a vehicle engine and an exhaust manifold connected to the vehicle engine which relate to the exhaust system component of the present invention.

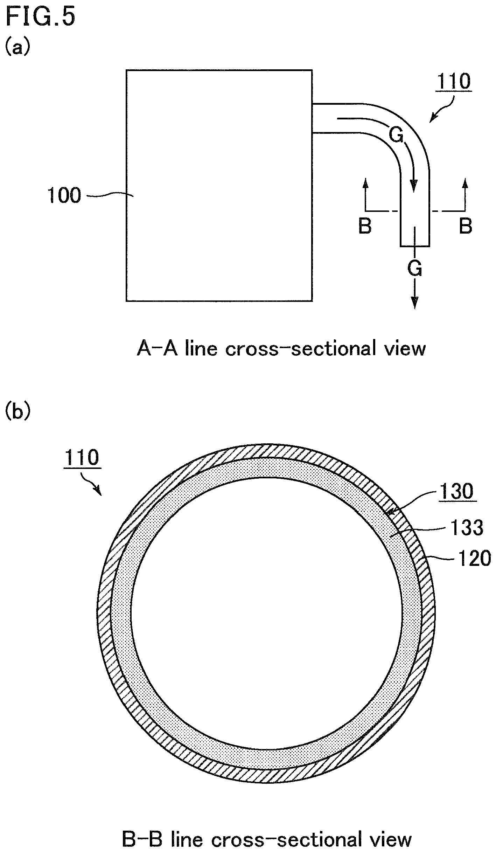

Fig. 5(a) is an A-A line cross-sectional view of the vehicle engine and the exhaust manifold illustrated in Fig. 4; and Fig. 5(b) is a B-B line cross-sectional view of the exhaust manifold illustrated in Fig. 5(a).

As illustrated in Fig. 4 and Fig. 5(a), an exhaust manifold 110 (the exhaust system component illustrated in Fig. 1 and Fig. 2) is connected to an engine 100 for passenger vehicles.

The engine 100 includes a cylinder block 101 and a cylinder head 102 installed on the top of the cylinder block. The exhaust manifold 110 is mounted on one side face of the cylinder head 102.

The exhaust manifold 110 has a glove-like shape, and includes branch pipes 111a, 111b, 111c, and 111d provided such that the number of branch pipes corresponds to the number of cylinders, and a collective portion 112 combining the branch pipes 111a, 111b, 111c, and 111d.

To the exhaust manifold 110 is connected a catalytic converter provided with a catalyst supporting carrier. The exhaust manifold 110 is configured to collect exhaust gas from the respective cylinders, and send the exhaust gas to components such as the catalytic converter.

Exhaust gas G (in Fig. 5(a), exhaust gas is indicated by G, and the exhaust gas flow direction is indicated by arrows) discharged from the engine 100 for a vehicle engine flows into the catalytic converter through the exhaust manifold 110, then is purified by the catalyst supported by the catalyst supporting carrier, and flows out through a vent.

As illustrated in Fig. 5(b), the exhaust manifold 110 (the exhaust system component of the present invention) includes a base 120 made of metal and a surface coat layer 130 disposed on the surface of the base 120.

In the exhaust manifold 110 (the exhaust system component of the present invention) illustrated in Fig. 5(b), the base 120 is a tubiform body, and the surface coat layer 130 is formed on the inner surface of the base 120.

In the exhaust system component (exhaust manifold) of the present invention, the structure of the surface coat layer can be the same as that of the surface coat layer of the exhaust system component described above.

Fig. 5(b) shows one example in which the structure of the surface coat layer 130 included in the exhaust manifold 110 is the same as that of the surface coat layer 12 in the exhaust system component 10 illustrated in Fig. 1. Although not illustrated, the amorphous inorganic material 13 includes crystalline inorganic material particles, reaction-derived particles, and pores, each dispersed therein.

The exhaust system component (exhaust manifold) of the present invention preferably has the surface coat layer disposed on the entire inner surface of the base. This is because the area of the surface coat layer contacting with exhaust gas is the maximum in this case, which gives particularly good heat resistance. The surface coat layer, however, may be formed on part of the inner surface of the base.

Also in the exhaust system component of the present invention, the surface coat layer may be formed on the outer surface, as well as the inner surface, of the base, or may be formed only on the outer surface.

Hereinabove, the exhaust system component of the present invention has been described as an exhaust manifold. The exhaust system component of the present invention can suitably be used as, for example, an exhaust pipe, a pipe constituting a catalytic converter, or a turbine housing, as well as an exhaust manifold.

The number of the branch pipes constituting the exhaust manifold is not limited if it is at least the same as the number of cylinders of the engine. Here, the engine may be, for example, a single cylinder engine, a two-cylinder engine, a four-cylinder engine, a six-cylinder engine, or an eight-cylinder engine.

In production of the exhaust system component in question of the present invention, it is the same as the aforementioned exhaust system component of the present invention described referring to Fig. 1 except for the shape of the base. Hence, the exhaust system component in question can be produced in the same manner as in the production of the aforementioned exhaust system component.

In formation of the surface coat layer on the inner surface of a base in the exhaust system component of the present invention, a base consisting of a first half-cut member and a second half-cut member as described above is preferably used.

The exhaust system component of the present invention described here can also exert the same effects as the effects (1) to (10) of the exhaust system component and the paint for an exhaust system component described referring to Fig. 1.

In the exhaust system component of the present invention, the surface coat layer may not necessarily be disposed on the entire surface of the base.

For example, in the case of using the exhaust system component of the present invention as an exhaust pipe, the surface coat layer may be disposed on the inner surface of a tubiform body as a base. In the case of forming a surface coat layer on the inner surface of the tubiform body, however, the surface coat layer needs not to be formed on the entire inner surface of the tubiform body as a base and it is formed at least on the part to be in direct contact with exhaust gas.

The essential elements of the exhaust system component of the present invention are as follows. Specifically, the exhaust system component comprises the base and one surface coat layer disposed on the surface of the base; the surface coat layer comprises an amorphous inorganic material layer containing silica, and crystalline inorganic material particles containing zirconia, reaction-derived particles generated by the reaction between the crystalline inorganic material particles and the amorphous inorganic material layer, and pores, each dispersed inside the amorphous inorganic material layer; the reaction-derived particles are crushed or needle-shaped particles; the ratio between the average pore size of the pores and the average particle size of the crystalline inorganic material particles ((average particle size of crystalline inorganic material particles)/(average pore size of pores)) is 0.1 to 10; and the surface coat layer is formed by applying, to a base, a paint for an exhaust system component comprising the amorphous inorganic material, a pore-forming material, and the crystalline inorganic material particles, and then heating the paint.

The desired effects can be achieved by appropriately combining these essential features with the above-described various configurations (e.g. the structure of the surface coat layer, the shape of the base, the exhaust manifold).

### REFERENCE SIGNS LIST

10, 20, 30: exhaust system component
110: exhaust manifold
11, 21, 31, 120: base
12, 22, 32, 130: surface coat layer
13: amorphous inorganic material layer
14: crystalline inorganic material particles
15: reaction-derived particles
16: pores

## Claims

1. An exhaust system component (10) comprising
a base (11) made of metal, and
one surface coat layer (12) disposed on the surface of the base (11),
the surface coat layer (12) comprising
alayer (13) of an amorphous inorganic material containing silica, and
crystalline inorganic material particles (14) containing zirconia, reaction-derived particles (15) generated by a reaction between the crystalline inorganic material particles (14) and the amorphous inorganic material, and pores (16), each dispersed inside the layer (13) of amorphous inorganic material, the reaction-derived particles (15) comprising crushed or needle-shaped particles,
the ratio between the average pore size of the pores (16) and the average particle size of the crystalline inorganic material particles (14) represented by (the average particle size of the crystalline inorganic material particles)/(the average pore size of the pores) being 0.1 to 10, and
the surface coat layer (12) is obtainable by applying, to the base (11), a paint for an exhaust system component comprising the amorphous inorganic material, pore-forming particles, and the crystalline inorganic material particles (14), and heating the paint applied,
the crystalline inorganic material particles (14) having an average particle size of 0.1 to 150 µm,
the weight of the crystalline inorganic material particles (14) for 100 parts by weight of the amorphous inorganic material being 30 to 180 parts by weight,
the pore-forming particles having an average particle size of 0.1 to 25 µm, and
the weight of the pore-forming particles for 100 parts by weight of the amorphous inorganic material being 0.001 to 1 parts by weight,
wherein the pore-forming particles comprise carbon, a carbonate, or a foaming agent.

2. The exhaust system component according to claim 1,
wherein
5 to 50% by weight of the crystalline inorganic material particles (14) are in contact with the pores (16) having a pore size of 0.1 to 50 µm.

3. The exhaust system component according to claim 1 or 2,
wherein
the crystalline inorganic material particles (14) contains 20% by weight of zirconia.

4. The exhaust system component according to any one of claims 1 to 3,
wherein
the surface coat layer (12) has a porosity of 30 to 80%.

5. The exhaust system component according to any one of claims 1 to 4,
wherein
the pores (16) have an average pore size of 0.1 to 50 µm.

6. The exhaust system component according to any one of claims 1 to 5,
wherein
the crystalline inorganic material particles (14) have an average particle size of 0.1 to 150 µm.

7. The exhaust system component according to any one of claims 1 to 6,
wherein
the reaction-derived particles (15) have an average particle size of 0.01 to 25 µm.

8. The exhaust system component according to any one of claims 1 to 7,
wherein
the surface coat layer (12) has a thickness of 50 to 2000 µm.

9. The exhaust system component according to any one of claims 1 to 8,
wherein
the surface coat layer (12) has a thermal conductivity at room temperature of 0.05 to 2 W/mK.

10. The exhaust system component according to any one of claims 1 to 9,
wherein
the crystalline inorganic material particles (14) are particles comprising zirconia or a composite oxide of zirconia and at least one of yttria, calcia, magnesia, ceria, alumina, and hafnia.

11. The exhaust system component according to any one of claims 1 to 10,
wherein
the amorphous inorganic material contains low-melting glass that has a softening point of 300°C to 1000°C.

12. The exhaust system component according to claim 11,
wherein
the low-melting glass contains at least one of barium glass, boron glass, strontium glass, alumina-silica glass, soda zinc glass, and soda barium glass.

13. The exhaust system component according to any one of claims 1 to 12,
wherein
the base (11) is an exhaust pipe, and the exhaust pipe has a surface coat layer disposed inside the exhaust pipe.

## Patentansprüche

1. Abgassystemkomponente (10), enthaltend eine Basis (11) aus Metall und
eine Oberflächenbeschichtungsschicht (12), die auf der Oberfläche der Basis (11) angeordnet ist,
wobei die Oberflächenbeschichtungsschicht (12) enthält:
eine Schicht (13) aus einem anorganischen amorphen Material, das Siliciumdioxid enthält, und
kristalline anorganische Materialteilchen (14), umfassend Zirkoniumoxid, Teilchen (15), die von einer Reaktion stammen, erzeugt durch eine Reaktion zwischen den kristallinen anorganischen Materialteilchen (14) und dem amorphen anorganischen Material, und Poren (16), die jeweils im Inneren der Schicht (13) aus einem anorganischen amorphen Material dispergiert sind, wobei die Teilchen (15), die von der Reaktion stammen, zerstoßene oder nadelförmige Teilchen enthalten,
wobei das Verhältnis zwischen der durchschnittlichen Porengröße der Poren (16) und der durchschnittlichen Teilchengröße der kristallinen anorganischen Materialteilchen (14), dargestellt durch (durchschnittliche Teilchengröße der kristallinen anorganischen Materialteichen)/(durchschnittliche Porengröße der Poren) 0,1 bis 10 ist, und
die Oberflächenbeschichtungsschicht (12) erhältlich ist durch Auftragen eines Lacks für eine Abgassystemkomponente auf die Basis (11), umfassend das amorphe anorganische Material, porenbildende Teilchen und die kristallinen anorganischen Materialteilchen (14), und durch Erwärmen des aufgetragenen Lacks,
wobei die kristallinen anorganischen Materialteilchen (14) eine durchschnittliche Teilchengröße von 0,1 bis 150 *µ*m haben,
das Gewicht der kristallinen anorganischen Materialteilchen (14) für 100 Gew.-Teile des amorphen anorganischen Materials 30 bis 180 Gew.-Teile ist,
die porenbildenden Teilchen eine durchschnittliche Teilchengröße von 0,1 bis 25 *µ*m haben und
das Gewicht der porenbildenden Teilchen für 100 Gew.-Teile des amorphen anorganischen Materials 0,001 bis 1 Gew.-Teil ist,
worin die porenbildenden Teilchen Kohlenstoff, ein Carbonat oder ein Schäummittel enthalten.

2. Abgassystemkomponente gemäß Anspruch 1, worin 5 bis 50 Gew.% der kristallinen anorganischen Materialteilchen (14) mit den Poren (16) mit einer Porengröße von 0,1 bis 50 *µ*m im Kontakt sind.

3. Abgassystemkomponente gemäß Anspruch 1 oder 2, worin die kristallinen anorganischen Materialteilchen (14) 20 Gew.% Zirkoniumoxid enthalten.

4. Abgassystemkomponente gemäß einem der Ansprüche 1 bis 3, worin die Oberflächenbeschichtungsschicht (12) eine Porosität von 30 bis 80 % hat.

5. Abgassystemkomponente gemäß einem der Ansprüche 1 bis 4, worin die Poren eine durchschnittliche Porengröße von 0,1 bis 50 *µ*m haben.

6. Abgassystemkomponente gemäß einem der Ansprüche 1 bis 5, worin die kristallinen anorganischen Materialteilchen (14) eine durchschnittliche Teilchengröße von 0,1 bis 150 *µ*m haben.

7. Abgassystemkomponente gemäß einem der Ansprüche 1 bis 6, worin die Teilchen (15), die von einer Reaktion stammen, eine durchschnittliche Teilchengröße von 0,01 bis 25 *µ*m haben.

8. Abgassystemkomponente gemäß einem der Ansprüche 1 bis 7, worin die Oberflächenbeschichtungsschicht (12) eine Dicke von 50 bis 2.000 *µ*m hat.

9. Abgassystemkomponente gemäß einem der Ansprüche 1 bis 8, worin die Oberflächenbeschichtungsschicht (12) eine thermische Leitfähigkeit bei Raumtemperatur von 0,05 bis 2 W/mK hat.

10. Abgassystemkomponente gemäß einem der Ansprüche 1 bis 9, worin die kristallinen anorganischen Materialteilchen (14) Teilchen sind, umfassend Zirkoniumoxid oder ein Verbundoxid von Zirkoniumoxid und zumindest einem von Yttriumoxid, Calciumoxid, Magnesiumoxid, Ceroxid, Aluminiumoxid und Hafniumoxid.

11. Abgassystemkomponente gemäß einem der Ansprüche 1 bis 10, worin das amorphe anorganische Material niedrigschmelzendes Glas enthält, das einen Erweichungspunkt von 300 bis 1.000°C hat.

12. Abgassystemkomponente gemäß Anspruch 11, worin das niedrigschmelzende Glas zumindest eines von Bariumglas, Borglas, Strontiumglas, Aluminia-Silika-Glas, Soda-Zink-Glas und Soda-Barium-Glas enthält.

13. Abgassystemkomponente gemäß einem der Ansprüche 1 bis 12, worin die Basis (11) ein Abgasrohr ist und das Abgasrohr eine Oberflächenbeschichtungsschicht aufweist, die im Inneren des Abgasrohres angeordnet ist.

## Revendications

1. Composant de système d'échappement (10) comprenant une base (11) faite de métal, et
une couche de revêtement de surface (12) disposée sur la surface de la base (11),
la couche de revêtement de surface (12) comprenant
une couche (13) d'un matériau inorganique amorphe contenant de la silice, et
des particules de matériau inorganique cristallin (14) contenant de la zircone, des particules dérivées d'une réaction (15) générées par une réaction entre les particules de matériau inorganique cristallin (14) et le matériau inorganique amorphe, et des pores (16), chacun dispersés à l'intérieur de la couche (13) de matériau inorganique amorphe,
les particules dérivées d'une réaction (15) comprenant des particules broyées ou en forme d'aiguille,
le rapport entre la taille moyenne de pore des pores (16) et la taille moyenne de particule des particules de matériau inorganique cristallin (14) représenté par (la taille moyenne de particule des particules de matériau inorganique cristallin)/(la taille moyenne de pore des pores) étant de 0,1 à 10, et
la couche de revêtement de surface (12) peut être obtenue par l'application, sur la base (11), d'une peinture pour un composant de système d'échappement comprenant le matériau inorganique amorphe, des particules formant des pores, et les particules de matériau inorganique cristallin (14), et par le chauffage de la peinture appliquée,
les particules de matériau inorganique cristallin (14) ayant une taille moyenne de particule de 0,1 à 150 µm,
le poids des particules de matériau inorganique cristallin (14) pour 100 parties en poids du matériau inorganique amorphe étant de 30 à 180 parties en poids,
les particules formant des pores ayant une taille moyenne de particule de 0,1 à 25 µm, et
le poids des particules formant des pores pour 100 parties en poids du matériau inorganique amorphe étant de 0,001 à 1 partie en poids,
dans lequel les particules formant des pores comprennent du carbone, un carbonate, ou un agent d'expansion.

2. Composant de système d'échappement selon la revendication 1,
dans lequel
5 à 50 % en poids des particules de matériau inorganique cristallin (14) sont en contact avec les pores (16) ayant une taille de pore de 0,1 à 50 µm.

3. Composant de système d'échappement selon la revendication 1 ou 2,
dans lequel
les particules de matériau inorganique cristallin (14) contiennent 20 % en poids de zircone.

4. Composant de système d'échappement selon l'une quelconque des revendications 1 à 3,
dans lequel
la couche de revêtement de surface (12) a une porosité de 30 à 80 %.

5. Composant de système d'échappement selon l'une quelconque des revendications 1 à 4,
dans lequel
les pores (16) ont une taille moyenne de pore de 0,1 à 50 µm.

6. Composant de système d'échappement selon l'une quelconque des revendications 1 à 5,
dans lequel
les particules de matériau inorganique cristallin (14) ont une taille moyenne de particule de 0,1 à 150 µm.

7. Composant de système d'échappement selon l'une quelconque des revendications 1 à 6,
dans lequel
les particules dérivées d'une réaction (15) ont une taille moyenne de particule de 0,01 à 25 µm.

8. Composant de système d'échappement selon l'une quelconque des revendications 1 à 7,
dans lequel
la couche de revêtement de surface (12) a une épaisseur de 50 à 2000 µm

9. Composant de système d'échappement selon l'une quelconque des revendications 1 à 8,
dans lequel
la couche de revêtement de surface (12) a une conductivité thermique à température ambiante de 0,05 à 2 W/mK.

10. Composant de système d'échappement selon l'une quelconque des revendications 1 à 9,
dans lequel
les particules de matériau inorganique cristallin (14) sont des particules comprenant de la zircone ou un oxyde composite de zircone et d'au moins un parmi l'oxyde d'yttrium, l'oxyde de calcium, l'oxyde de magnésium, l'oxyde de cérium, l'oxyde d'aluminium, et l'oxyde d'hafnium.

11. Composant de système d'échappement selon l'une quelconque des revendications 1 à 10,
dans lequel
le matériau inorganique amorphe contient un verre à point de fusion bas qui a un point de ramollissement de 300 °C à 1000 °C.

12. Composant de système d'échappement selon la revendication 11,
dans lequel
le verre à point de fusion bas contient au moins un parmi un verre de baryum, un verre de bore, un verre de strontium, un verre d'alumine-silice, un verre d'oxyde de soude-zinc, et un verre de soude-baryum.

13. Composant de système d'échappement selon l'une quelconque des revendications 1 à 12,
dans lequel
la base (11) est un tuyau d'échappement, et le tuyau d'échappement a une couche de revêtement de surface disposée à l'intérieur du tuyau d'échappement.
